# EUROPÄISCHE PATENTSCHRIFT

(11) **EP 3 688 855 B1**
(45) Veröffentlichungstag und Bekanntmachung des Hinweises auf die Patenterteilung: **14.04.2021**
(21) Anmeldenummer: 18774064.2
(22) Anmeldetag: 28.09.2018
(51) Int. Cl.: H02J 3/38, H02H 7/12

(54) **SCHALTUNGSANORDNUNG ZUM SCHALTEN VON WECHSELRICHTERGERÄTEN**
CIRCUIT ASSEMBLY FOR THE SWITCHING OF INVERTER DEVICES
CIRCUIT DE COMMUTATION DE L'APPAREIL D'ONDULATION

(30) Priorität: 29.09.2017 EP 17194138
(43) Veröffentlichungstag der Anmeldung: 05.08.2020
(73) Patentinhaber: Fronius International GmbH, 4643 Pettenbach (AT)
(72) Erfinder: GERSTLACHER, Florian, 4643 Pettenbach (AT); FISCHEREDER, Franz, 4643 Pettenbach (AT); BREUER, Stefan, 4643 Pettenbach (AT); GRABNER, Thomas, 4643 Pettenbach (AT)
(74) Vertreter: Isarpatent
(86) Internationale Anmeldenummer: PCT/EP2018/076475
(87) Internationale Veröffentlichungsnummer: WO 2019/063793

(56) Entgegenhaltungen:
- EP-A2- 1 209 789
- US-A1- 2015 001 945
- US-A1- 2016 036 235
- US-A1- 2017 271 875

## Beschreibung

Die Erfindung betrifft eine Schaltungsanordnung zum sicheren Schalten von Wechselrichtergeräten einer Anlage, insbesondere einer Photovoltaikanlage. Eine technische Anlage kann mehrere seriell oder parallel verschaltete Wechselrichtergeräte aufweisen. In vielen Anwendungsfällen ist es erforderlich diese Wechselrichtergeräte mit einem einzigen gemeinsamen Notschalter auszuschalten. In herkömmlichen Anlagen können die Wechselrichter seriell oder parallel mit einem derartigen Notschalter verbunden werden. Allerdings kann es hierbei zu Verdrahtungsfehlern kommen. Weiterhin besteht die Möglichkeit, dass ein Wechselrichtergerät der Anlage ausfällt bzw. defekt ist.

Anordnungen zum Schalten von Wechselrichtern in Photovoltaikanlagen sind aus US 2015/001945, US 2017/271875, US 2016/036235 bekannt.

Es ist daher eine Aufgabe der vorliegenden Erfindung eine Schaltungsanordnung zum sicheren Schalten von Wechselrichtergeräten einer Anlage zu schaffen, die es erlaubt mit einem einzigen gemeinsamen Notschalter die Wechselrichtergeräte der Anlage sicher zu schalten.

Diese Aufgabe wird erfindungsgemäß durch eine Schaltungsanordnung mit den in Patentanspruch 1 beschriebenen Merkmalen gelöst.

Die Erfindung schafft gemäß einem ersten Aspekt eine Schaltungsanordnung zum sicheren Schalten von Wechselrichtergeräten einer Anlage durch einen gemeinsamen Notschalter, der an einem Schaltsignaleingang eines der Wechselrichtergeräte angeschlossen ist, das mittels eines an dem Wechselrichtergerät vorgesehenen Konfigurationsschalter als Master der Anlage konfiguriert ist und einen Schaltsignalausgang aufweist, an dem andere mittels Konfigurationsschaltern als Slave konfigurierte Wechselrichtergeräte der Anlage über Schaltsignalleitungen kettenförmig nachgeschaltet sind, wobei die als Slave konfigurierten Wechselrichtergeräte zusammen mit dem als Master konfigurierten Wechselrichtergerät eine Schaltkette bilden, welche bei Betätigung des Notschalters über die Schaltsignalleitungen automatisch geschaltet wird.

Bei einer möglichen Ausführungsform der erfindungsgemäßen Schaltungsanordnung weisen die Wechselrichtergeräte der Schaltkette jeweils vierpolige Anschlussklemmen auf, die jeweils einen zweipoligen Schaltsignaleingang und einen zweipoligen Schaltsignalausgang umfassen.

Bei einer möglichen Ausführungsform der erfindungsgemäßen Schaltungsanordnung sind der zweipolige Schaltsignaleingang und der zweipolige Schaltsignalausgang der Anschlussklemme des Wechselrichtergerätes zur Vermeidung von Ausgleichsströmen zwischen den Wechselrichtergeräten der Schaltkette durch eine Potentialtrennschaltung voneinander potentialgetrennt.

Bei einer weiteren möglichen Ausführungsform der erfindungsgemäßen Schaltungsanordnung sind der zweipolige Schaltsignaleingang und der zweipolige Schaltsignalausgang der Anschlussklemme des Wechselrichtergerätes durch eine als Optokopplerschaltung ausgebildete Potentialtrennschaltung voneinander potentialgetrennt.

Bei einer weiteren möglichen Ausführungsform der erfindungsgemäßen Schaltungsanordnung wird ein defektes oder ausgefallenes Wechselrichtergerät innerhalb der Schaltkette mittels einer in dem Wechselrichtergerät enthaltenen Überbrückungsschaltung automatisch überbrückt.

Bei einer weiteren möglichen Ausführungsform der erfindungsgemäßen Schaltungsanordnung ist die Überbrückungsschaltung des Wechselrichtergerätes zwischen dem Schaltsignaleingang und dem Schaltsignalausgang der Anschlussklemme des Wechselrichtergerätes vorgesehen.

Bei einer weiteren möglichen Ausführungsform der erfindungsgemäßen Schaltungsanordnung weist die Überbrückungsschaltung des Wechselrichtergerätes je Schaltsignalleitung zumindest eine in Flussrichtung geschalteten Diode auf.

Bei einer weiteren möglichen Ausführungsform der erfindungsgemäßen Schaltungsanordnung erfolgt eine Konfiguration eines der Wechselrichtergeräte der Anlage als Master einer Schaltkette mittels des an dem Wechselrichtergerät vorgesehenen Konfigurationsschalters.

Bei einer weiteren möglichen Ausführungsform der erfindungsgemäßen Schaltungsanordnung werden die Wechselrichtergeräte der Schaltkette ausgehend von dem als Master konfigurierten Wechselrichtergerät über Schaltsignalleitungen kaskadenförmig schrittweise deaktiviert oder aktiviert.

Bei einer weiteren möglichen Ausführungsform der erfindungsgemäßen Schaltungsanordnung ist der Notschalter ein passiver Schalter, der an einem Schaltsignaleingang des als Master konfigurierten Wechselrichtergeräts der Anlage angeschlossen ist.

Bei einer weiteren möglichen Ausführungsform der erfindungsgemäßen Schaltungsanordnung weist jedes Wechselrichtergerät der Schaltkette einen Gleichstromeingang zum Anschluss von Solarpaneelen auf, die bei Sonnenlichteinstrahlung einen Gleichstrom erzeugen, welcher durch eine in dem Wechselrichtergerät vorgesehene Stromwandlerschaltung in einen Wechselstrom umgewandelt wird.

Bei einer weiteren möglichen Ausführungsform der erfindungsgemäßen Schaltungsanordnung wird bei Aktivierung eines Wechselrichtergerätes der Schaltkette ein in dem Wechselrichtergerät vorgesehenes AC-Relais geschlossen, um den durch die in dem Wechselrichtergerät vorgesehene Stromwandlerschaltung erzeugten Wechselstrom an ein Stromnetz abzugeben.

Bei einer weiteren möglichen Ausführungsform der erfindungsgemäßen Schaltungsanordnung weist die Schaltungsanordnung ausschließlich Hardwarekomponenten auf.

Bei einer weiteren möglichen Ausführungsform der erfindungsgemäßen Schaltungsanordnung ist die Schaltungsanordnung einfehlersicher ausgebildet.

Bei einer weiteren möglichen Ausführungsform der erfindungsgemäßen Schaltungsanordnung wird bei einem Verkabelungsfehler das betreffende Wechselrichtergerät automatisch in einen sicheren Betriebszustand geschaltet.

Die Erfindung umfasst ferner gemäß einem weiteren zweiten Aspekt eine Photovoltaikanlage mit den in Patentanspruch 14 angegebenen Merkmalen.

Die Erfindung schafft demnach eine Photovoltaikanlage mit Photovoltaikstrings, die jeweils an ein zugehöriges Wechselrichtergerät angeschlossen sind, wobei die Wechselrichtergeräte der Photovoltaikanlage mittels einer Schaltungsanordnung gemäß dem ersten Aspekt der Erfindung durch Betätigung eines gemeinsamen Notschalters sicher schaltbar sind.

Die Erfindung schafft ferner gemäß einem weiteren dritten Aspekt ein Wechselrichtergerät für eine Anlage mit den in Patentanspruch 15 angegebenen Merkmalen.

Die Erfindung schafft demnach ein Wechselrichtergerät für eine Anlage, insbesondere für eine Photovoltaikanlage, wobei das Wechselrichtergerät
einen Schaltsignaleingang zum Anschließen eines Notschalters der Anlage oder zum Anschließen eines Schaltsignalausgangs eines anderen Wechselrichtergerätes der Anlage und einen Schaltsignalausgang zum Anschließen eines Schaltsignaleingangs eines anderen Wechselrichtergerätes der Anlage aufweist,
wobei das Wechselrichtergerät bei Anschluss eines Notschalters an seinem Schaltsignaleingang mittels eines an dem Wechselrichtergerät vorgesehenen Konfigurationsschalters als Master einer Schaltkette der Anlage konfigurierbar ist, die das als Master konfigurierte Wechselrichtergerät selbst und alle an dessen Schaltsignalausgang über Schaltsignalleitungen kettenförmig nachgeschalteten und mittels Konfigurationsschaltern als Slave konfigurierte Wechselrichtergeräte umfasst, wobei die gesamte Schaltkette bei Betätigung des an dem Schaltsignaleingang des als Master konfigurierten Wechselrichtergerätes angeschlossenen Notschalters über die Schaltsignalleitungen kaskadenförmig automatisch geschaltet wird.

Im Weiteren werden mögliche Ausführungsformen der verschiedenen Aspekte der Erfindung unter Bezugnahme auf die beigefügten Figuren erläutert.

### Es zeigen:

Fig. 1 ein Blockschaltbild einer möglichen Ausführungsform einer Schaltungsanordnung gemäß einem ersten Aspekt der vorliegenden Erfindung;
Fig. 2 ein Blockschaltbild zur Darstellung eines Ausführungsbeispieles einer Photovoltaikanlage gemäß einem weiteren Aspekt der Erfindung.

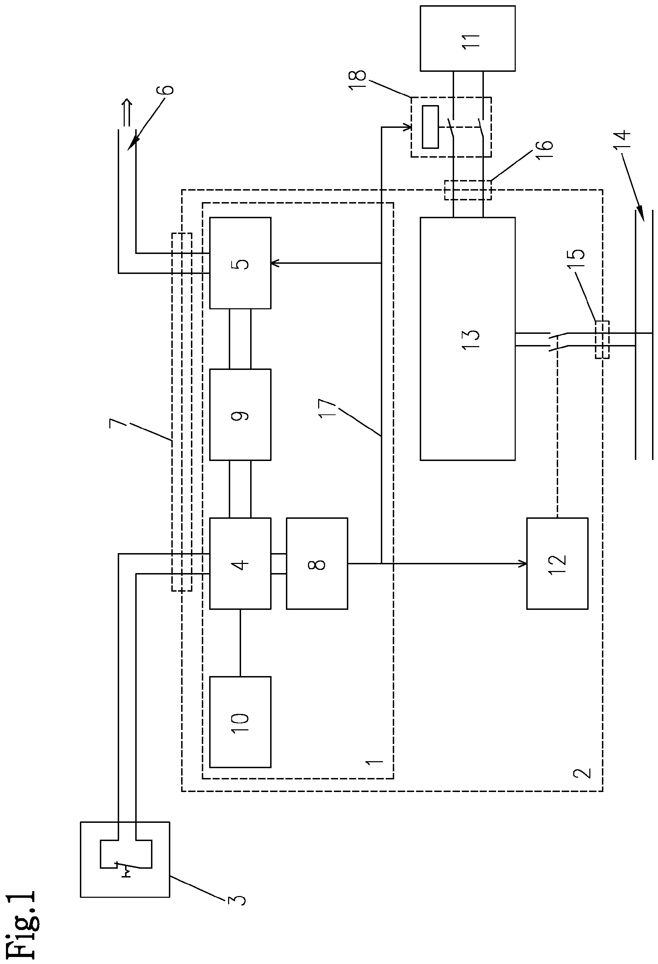

Wie man aus Fig. 1 erkennen kann, kann eine erfindungsgemäße Schaltungsanordnung 1 gemäß dem ersten Aspekt der vorliegenden Erfindung in einem Wechselrichtergerät 2 einer Anlage vorgesehen werden. Bei dem in Fig. 1 dargestellten Ausführungsbeispiel ist eine Schaltungsanordnung 1, die zum sicheren Schalten von Wechselrichtergeräten einer Anlage durch einen gemeinsamen Notschalter 3 dient, jeweils in den zu schaltenden Wechselrichtergeräten 2 integriert. In einer bevorzugten Ausführungsform besitzen die verschiedenen Wechselrichtergeräte 2 einer Anlage, insbesondere einer Photovoltaikanlage, jeweils eine zugehörige Schaltungsanordnung 1, wie in Fig. 1 dargestellt, wobei die Schaltungsanordnung 1 vorzugsweise in dem Wechselrichtergerät 2 integriert ist. Bei einer alternativen Ausführungsform kann die Schaltungsanordnung 1 des Wechselrichtergerätes 2 auch eine separate an das Wechselrichtergerät 2 angeschlossene Schaltung bilden. Die Anlage, beispielsweise eine Photovoltaikanlage, kann mehrere in einer Schaltkette miteinander verschaltete Wechselrichtergeräte 2 aufweisen.

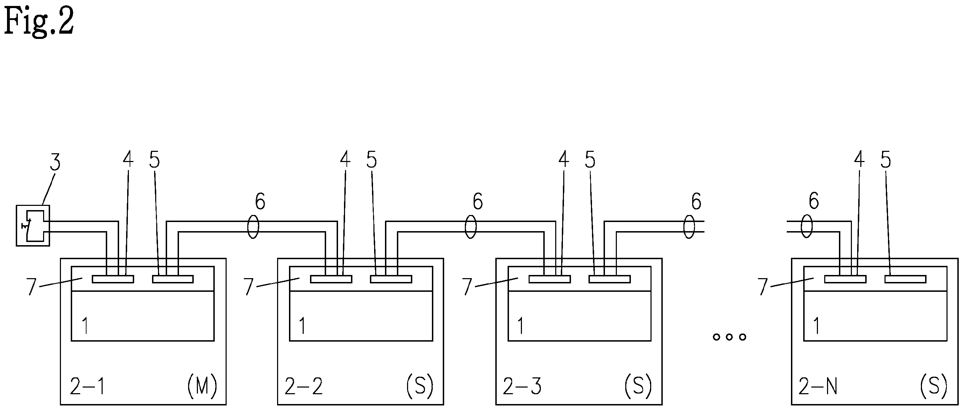

Fig. 2 zeigt ein Ausführungsbeispiel, in dem eine Schaltkette SK aus mehreren Wechselrichtergeräten 2 der Anlage besteht. Die verschiedenen Wechselrichtergeräte 2 bilden einen Schaltverbund bzw. eine Schaltkette SK, die mittels eines einzigen gemeinsamen Notschalters bzw. Notausschalters 3 einfehlersicher abgeschaltet werden können.

Die Schaltungsanordnung 1 eines Wechselrichtergerätes 2 besitzt einen Schaltsignaleingang 4 und einen Schaltsignalausgang 5 wie in dem Blockschaltbild gemäß Fig. 1 dargestellt. Die verschiedenen Wechselrichtergeräte 2 können jeweils als ein Mastergerät M oder als ein Slavegerät S konfiguriert werden. Ein Wechselrichtergerät 2 der Schaltkette SK wird als Master M der betreffenden Schaltkette der Anlage konfiguriert. An dem Schaltsignaleingang 4 desjenigen Wechselrichtergeräts 2, welches als Master M der Schaltkette SK bzw. der Anlage konfiguriert ist, ist ein Notschalter 3 für die gesamte Schaltkette SK angeschlossen. Bei dem in Fig. 1 dargestellten Blockschaltbild kann das Wechselrichtergerät 2 als Master M der Schaltkette SK konfiguriert werden und der Notschalter 3 wird an den Schaltsignaleingang 4 dieses Wechselrichtergerätes 2 angeschlossen. Der Schaltsignalausgang 5 des Wechselrichtergerätes 2, welches als Master M der Anlage konfiguriert ist, ist über Schaltsignalleitungen 6 mit einem anderen als Slave S konfigurierten Wechselrichtergerät 2 der Anlage verbunden. Bei dem in Fig. 1 dargestellten Blockschaltbild, welches ein als Master M konfiguriertes Wechselrichtergerät 2 der Schaltkette darstellt, ist der Schaltsignalausgang 5 über zwei Schaltsignalleitungen 6 mit einem (nicht dargestellten) Schaltsignaleingang 4 eines nachgeschalteten Wechselrichtergerätes 2 verbunden, das als Slave bzw. Slavegerät (S) konfiguriert ist. Dieses Slave-Wechselrichtergerät 2 besitzt seinerseits einen Schaltsignalausgang, der über Schaltsignalleitungen 6 mit dem nächsten ebenfalls als Slave S konfigurierten Wechselrichtergerät 2 der Schaltkette SK verbunden ist. Eine Schaltkette mit einer vorgegebenen Anzahl N von Wechselrichtergeräten 2 umfasst demnach vorzugsweise ein einziges als Master M konfiguriertes Wechselrichtergerät 2, wie es beispielsweise in Fig. 1 dargestellt ist, und N-1 als Slave S konfigurierte Wechselrichtergeräte 2. Die als Slave S konfigurierten N-1 Wechselrichtergeräte 2 bilden zusammen mit dem als Master M konfigurierten Wechselrichtergerät 2 eine Schaltkette SK der Anlage. Die gesamte Schaltkette SK wird bei Betätigung des Notschalters 3, welcher an dem Schaltsignaleingang 4 des ersten als Master M konfigurierten Wechselrichtergerätes 2-1 angeschlossen ist, automatisch abgeschaltet bzw. stromlos geschaltet.

In einer möglichen Ausführungsform weisen die verschiedenen Wechselrichtergeräte 2 der Schaltkette SK jeweils vierpolige Anschlussklemmen 7 auf, wie in dem Blockschaltbild gemäß Fig. 1 dargestellt. Die vierpolige Anschlussklemme 7 umfasst jeweils einen zweipoligen Schaltsignaleingang 4 und einen zweipoligen Schaltsignalausgang 5.

Zur Vermeidung von Ausgleichsströmen zwischen den verschiedenen Wechselrichtergeräten 2 der Schaltkette SK sind der zweipolige Schaltsignaleingang 4 und der zweipolige Schaltsignalausgang 5 der Anschlussklemme 7 des Wechselrichtergerätes 2 vorzugsweise voneinander potentialgetrennt. Bei der in Fig. 1 dargestellten Ausführungsform enthält die Schaltungsanordnung 1 eine entsprechende Potentialtrennungsschaltung 8.

In einer möglichen Ausführungsform der erfindungsgemäßen Schaltungsanordnung 1 sind der zweipolige Schaltsignaleingang 4 und der zweipolige Schaltsignalausgang 5 der Anschlussklemme 7 des Wechselrichtergerätes 2 durch eine Optokopplerschaltung als Potentialtrennungsschaltung 8 voneinander potentialgetrennt. Die Potentialtrennungsschaltung 8 besitzt bei einer möglichen Ausführungsform für jede der beiden Schaltsignalleitungen 6 des Schaltsignaleingangs 4 einen Optokoppler, der eine Leuchtdiode und einen zugehörigen Phototransistor umfasst. Die Konfiguration des Wechselrichtergerätes 2 als Mastergerät M oder als Slavegerät S erfolgt vorzugsweise mittels eines an dem Wechselrichtergerät 2 vorgesehenen Konfigurationsschalters 10. Bei einer möglichen Ausführungsform wird der Konfigurationsschalter 10 durch einen DIP-Schalter gebildet. Bei einer bevorzugten Ausführungsform ist der Konfigurationsschalter 10 eine Hardwareschaltkomponente, die vorzugsweise manuell betätigbar ist, um das betreffende Wechselrichtergerät 2 als Mastergerät M oder als Slavegerät S zu konfigurieren bzw. umzukonfigurieren.

Die Wechselrichtergeräte 2 einer Schaltkette SK werden ausgehend von dem als Master M konfigurierten Wechselrichtergerät 2-1 über Schaltsignalleitungen 6 kaskadenförmig bzw. schrittweise deaktiviert, nachdem der Notschalter 3, der an dem als Master M konfigurierten Wechselrichtergerät 2 vorgesehen ist, durch einen Nutzer bzw. eine Person betätigt worden ist. Bei dem Notschalter 3 handelt es sich vorzugsweise um einen passiven Schalter, der an dem Schaltsignaleingang 4 des als Master M konfigurierten Wechselrichtergeräts 2-1 der Anlage angeschlossen ist. Bei dem in Fig. 1 dargestellten Ausführungsbeispiel ist ein passiver Notschalter 3 an dem Schaltsignaleingang 4 des Wechselrichtergerätes 2 angeschlossen. Dieses Wechselrichtergerät 2 ist mithilfe seines Konfigurationsschalters 10 als Master M der Schaltkette SK konfiguriert. Sobald ein Nutzer den Notschalter 3 betätigt, wird zunächst das als Master M konfigurierte Wechselrichtergerät 2 ausgeschaltet bzw. deaktiviert. Anschließend werden über die Schaltsignalleitungen 6 schrittweise die übrigen nachgeschalteten Wechselrichtergeräte 2 der Schaltkette SK, welche von den zugehörigen Konfigurationsschaltern 10 jeweils als Slavegeräte S konfiguriert worden sind, abgeschaltet.

Bei dieser Ausführungsform können somit mithilfe des Notschalters 3 alle Wechselrichtergeräte 2 einer Schaltkette SK in kurzer Zeit kaskadenförmig bzw. schrittweise automatisch deaktiviert werden. In dieser Ausführungsform bildet der Notschalter 3 einen Notausschalter, beispielsweise zur Notausschaltung einer Photovoltaikanlage.

In einer alternativen Ausführungsform kann der Notschalter 3 auch zur schrittweisen Aktivierung von Wechselrichtergeräten einer Anlage verwendet werden. Bei dieser alternativen Ausführungsform bildet der Notschalter 3 einen Noteinschalter der betreffenden Anlage.

Bei der in Fig. 1 dargestellten Ausführungsform des Wechselrichtergerätes 2 ist zwischen dem Schaltsignaleingang 4 und dem Schaltsignalausgang 5 der Schaltungsanordnung 1 eine Überbrückungsschaltung 9 vorgesehen. Ein defektes oder ausgefallenes Wechselrichtergerät 2 innerhalb der Schaltkette SK wird mittels der in dem Wechselrichtergerät 2 enthaltenen Überbrückungsschaltung 9 vorzugsweise automatisch überbrückt. Bei einer möglichen Ausführungsform weist die Überbrückungsschaltung 9 des Wechselrichtergerätes 2 je Schaltsignalleitung 6 zumindest eine in Flussrichtung geschaltete Diode auf. Je Schaltsignalleitung ist eine Diode vorgesehen, die in Flussrichtung geschaltet ist, um in einem Fehlerfall des betreffenden Wechselrichtergerätes 2 innerhalb der Schaltkette das defekte Wechselrichtergerät 2 automatisch zu überbrücken. Einzelne defekte Wechselrichtergeräte können somit automatisch überbrückt werden und führen nicht zu einem Ausfall des gesamten Systems bzw. der gesamten Anlage. Die Überbrückungsschaltung 9 bildet somit eine Bypassschaltung, die bei Ausfall eines Wechselrichtergerätes 2 dieses ausgefallene Wechselrichtergerät überbrückt.

Bei dem in Fig. 1 dargestellten Ausführungsbeispiel wird das Wechselrichtergerät 2 innerhalb einer Photovoltaikanlage verwendet. Solarpaneele 11 sind über eine RSB (Rapid Shutdown Box) Schaltanordnung 18 an einen Gleichstrom bzw. DC-Eingang 16 des Wechselrichtergerätes 2 angeschlossen, wie in Fig. 1 dargestellt. Bei einer Notausbetätigung des Notausschalters 3 führt dies zu einer Trennung der Solarpaneele 11 von dem Wechselrichtergerät 2 indem die RSB-Schaltungsanordnung 18 geöffnet wird. Bei dem in Fig. 1 dargestellten Ausführungsbeispiel ist der Ausgang der Potentialtrennungsschaltung 8 über Freigabeleitungen 17 sowohl mit dem Schaltsignalausgang 5 als auch mit der RSB Schaltstufe 18 verbunden. Bei einer möglichen Ausführungsform kann die Kommunikation zu der RSB-Schaltanordnung 18 auch mithilfe von Powerline Communication (PLC) auf Gleichstromleitungen erfolgen. Jedes Wechselrichtergerät 2 der Schaltkette besitzt einen Gleichstromeingang 16 zum Anschluss von Solarpaneelen 11. Diese Solarpaneele 11 erzeugen bei Sonnenlichteinstrahlung einen Gleichstrom, welcher bei geschlossenem RSB-Schalter 18 über den DC-Eingang 16 einer Stromwandlerschaltung 13 des Wechselrichtergerätes 2 zugeführt wird. Die in dem Wechselrichtergerät 2 vorgesehene Stromwandlerschaltung 13 wandelt den erhaltenen Gleichstrom (DC) in einen Wechselstrom (AC) um. Bei Aktivierung eines Wechselrichtergerätes 2 der Schaltkette SK wird ein an den Wechselrichtergerät 2 vorgesehenes AC-Relais 12 geschlossen, um den durch die Stromwandlerschaltung 13 erzeugten Wechselstrom (AC) über einen AC-Ausgang 15 des Wechselrichtergerätes 2 an ein Stromnetz 14 abzugeben, wie in Fig. 1 schematisch dargestellt. In Folge einer Notausbetätigung des Notausschalters 3 werden die RSB-Schaltungsanordnung 18 getrennt bzw. geöffnet, damit keine Energie in die Wechselrichtergeräte 2 der Schaltkette SK eingespeist wird. Ferner werden die AC-Relais 12 geöffnet, um die Wechselrichtergeräte 2 vom Stromnetz 14 zu trennen.

Bei einer bevorzugten Ausführungsform weist die Schaltungsanordnung 1 ausschließlich Hardwarekomponenten auf. Darüber hinaus ist die Schaltungsanordnung 1 vorzugsweise einfehlersicher ausgebildet. Normative Vorgaben können darin bestehen, dass der Ausfall eines einzelnen Bauteils bzw. einer einzelnen Komponenten in einer sicherheitskritischen Anwendung bzw. sicherheitskritischen Anlage nicht zu einer möglicherweise gefährlichen Fehlfunktion führen. Bei einer bevorzugten Ausführungsform ist die Schaltungsanordnung 1 demnach einfehlersicher ausgebildet, d.h. bei Ausfall eines einzelnen Bauteils bzw. einzelnen Baukomponente der Schaltungsanordnung 1 hat dies noch keine Auswirkung auf die Funktionsfähigkeit des Schaltmechanismus, insbesondere des Abschaltmechanismus. Derartige Einzelfehler umfassen beispielsweise einen Kurzschluss zwischen zwei benachbarten Pins von Bauelementen oder einen Kurzschluss eines Pins eines Bauelementes bzw. Bauteils gegen eine Versorgungsspannung bzw. Masse. Weitere mögliche Einzelfehler umfassen beispielsweise fehlerhafte offene Verbindungen zwischen Bauteilen bzw. Komponenten der Schaltungsanordnung 1. Auch ein Fehlverhalten einer implementierten Software oder eine Fehlverdrahtung können Fehlerquellen bilden. Um ein Fehlverhalten durch Software weitestgehend auszuschließen, wird daher die Schaltungsanordnung 1 vorzugsweise ausschließlich aus Hardwarekomponenten bzw. Hardwarebauteilen gebildet. Die Einfehlersicherheit der Schaltungsanordnung 1 wird bei einer bevorzugten Ausführungsform durch redundantes Vorsehen von Bauteilen bzw. Bauelementen erreicht. Beispielsweise werden die verschiedenen Bauteile bzw. Bauelemente der Schaltungsanordnung 1 jeweils doppelt bzw. zweifach vorgesehen. Weiterhin kann durch Vorsehen geeigneter Abstände zwischen den Bauelementen bzw. Bauteilen bzw. deren Anschlusspins die Wahrscheinlichkeit für das Auftreten eines Kurzschlusses verringert werden.

In einer bevorzugten Ausführungsform der erfindungsgemäßen Schaltungsanordnung 1 führt somit das isolierte Auftreten eines einzigen Fehlers nicht zu einer Einschränkung der Funktionsfähigkeit der Schaltungsanordnung 1.

Bei einer weiteren möglichen Ausführungsform der erfindungsgemäßen Schaltungsanordnung 1 wird bei einem Verkabelungsfehler das betreffende Wechselrichtergerät 2 automatisch in einen sicheren Betriebszustand geschaltet.

Fig. 2 zeigt Ausführungsbeispiele für eine Schaltkette SK, welche aus mehreren miteinander verschalteten Wechselrichtergeräten 2 gebildet ist. An dem ersten Wechselrichtergerät 2 der Schaltkette SK ist ein externer Notschalter 3 angeschlossen. Dieses erste Wechselrichtergerät 2-1 ist mithilfe eines zugehörigen Konfigurationsschalters 10 als Master M der Schaltkette SK konfiguriert. Die Anzahl der nachgeschalteten Slave-Wechselrichtergeräte 2 kann je nach Anwendungsfall variieren. Durch Betätigung des Notschalters 3 kann die gesamten Schaltkette SK geschaltet werden. Bei einer möglichen Ausführungsform werden in Folge der Betätigung des Notschalters 3 alle Wechselrichtergeräte 2 der Schaltkette SK vorzugsweise nacheinander kaskadenförmig deaktiviert. Beispielsweise können Wechselrichtergeräte 2 einer Schaltkette SK innerhalb einer Photovoltaikanlage innerhalb kurzer Zeit automatisch mithilfe des Notschalters 3 deaktiviert werden. Bei einer alternativen Ausführungsform können mithilfe des Notschalters 3 auch Wechselrichtergeräte 2 der Schaltkette SK automatisch aktiviert bzw. angeschaltet werden.

Wie man in Fig. 2 erkennen kann, ist die Verkabelung der verschiedenen Wechselrichtergeräte 2-i innerhalb der Schaltkette SK besonders einfach und erfolgt vorzugsweise mit zwei Schaltsignalleitungen 6 zwischen zwei benachbarten Wechselrichtergeräten. Die Konfiguration bzw. Umkonfiguration der Wechselrichtergeräte 2 erfolgt durch einen zugehörigen jeweils daran vorgesehenen Konfigurationsschalter 10.

Jedes Wechselrichtergerät 2 der Schaltkette SK verfügt über eine integrierte Überbrückungsschaltung bzw. Bypassschaltung 9, sodass jedes Wechselrichtergerät 2 bei Ausfall automatisch überbrückt wird. Zudem sind die verschiedenen Wechselrichtergeräte vorzugsweise durch eine Optokopplerschaltung bzw. Potentialtrennstufe 8 voneinander potentialgetrennt, um ungewollte Ausgleichsströme zwischen den Wechselrichtergeräten 2 der Schaltkette SK zu vermeiden. Die in Fig. 2 dargestellte Schaltkette SK ist vorzugsweise eine reine Hardwareschaltung und enthält keine Softwarekomponenten. Dies erleichtert die Zertifizierung der Schaltkette SK, insbesondere einer Schaltkette innerhalb einer Photovoltaikanlage. Durch die ausschließliche Verwendung von Hardwarekomponenten kann die Funktionsfähigkeit der Anlage leicht nachvollzogen werden, wodurch eine mögliche Zertifizierung ebenfalls erleichtert wird.

Weitere Ausführungsvarianten der erfindungsgemäßen Schaltungsanordnung sind möglich.

Beispielsweise kann einem Nutzer mittels einer optischen Anzeige angezeigt werden, ob das betreffende Wechselrichtergerät 2 mittels des zugehörigen Konfigurationsschalters 10 als Mastergerät M oder als Slavegerät S konfiguriert ist. Durch Betätigung des Konfigurationsschalters 10 kann dann das entsprechende Wechselrichtergerät 2 entsprechend den Anforderungen der Anlage durch einen Nutzer umkonfiguriert werden. Bei einer weiteren möglichen Ausführungsform können die verschiedenen Konfigurationsschalter 10 einer Schaltkette SK mit einer Logikschaltung verbunden sein, um zu überprüfen, ob die verschiedenen Wechselrichtergeräte 2 innerhalb einer Schaltkette SK geeignet konfiguriert worden sind. Vorzugsweise wird das erste Wechselrichtergerät 2-1 der Schaltkette SK, welches mit dem Notschalter 3 verbunden ist, als Master M konfiguriert und die übrigen Wechselrichtergeräte 2 der Schaltkette SK als Slave S konfiguriert. Die Logikschaltung kann automatisch überprüfen, ob die Konfiguration der verschiedenen Wechselrichtergeräte 2 innerhalb der Schaltkette SK korrekt vorgenommen worden ist oder nicht.

Bei einer weiteren möglichen Ausführungsform verfügt das Wechselrichtergerät 2 über eine Sensorik, um festzustellen, ob an seinem Schaltsignaleingang 4 ein anderes Wechselrichtergerät 2 vorgeschaltet ist oder ein Notschalter 3 angeschlossen worden ist. Stellt diese Sensorik fest, dass an dem Schaltsignaleingang 4 ein Notschalter 3 angeschlossen ist, kann bei einer möglichen Ausführungsform eine automatische Umkonfiguration des Wechselrichtergeräts 2 als Master M einer Schaltkette SK vorgenommen werden. Stellt die Sensorik umgekehrt fest, dass an dem Schaltsignaleingang 4 ein Schaltsignalausgang 5 eines vorgeschalteten Wechselrichtergerätes 2 der Schaltkette SK angeschlossen ist, wird das betreffende Wechselrichtergerät 2 in einer möglichen Ausführungsform automatisch als Slave-Wechselrichtergerät 2 konfiguriert. Bei dieser Ausführungsvariante erfolgt somit die Konfiguration bzw. Umkonfiguration automatisch bzw. halbautomatisch. Bei einer möglichen Ausführungsvariante wird eine fehlerhafte Konfiguration eines Wechselrichtergerätes 2 automatisch angezeigt. Beispielsweise wird das Wechselrichtergerät 2, an dessen Schaltsignaleingang 4 der Notschalter 3 angeschlossen ist, irrtümlicherweise mithilfe seines Konfigurationsschalters 10 nicht als Master M konfiguriert, kann dieser Konfigurationsfehler beispielsweise mittels einer Logikschaltung erkannt und dann einem Nutzer angezeigt werden.

Bei einer weiteren Ausführungsvariante kann angezeigt werden, ob die Überbrückungsschaltung 9 eine Überbrückung bei Auftreten eines Fehlers vorgenommen hat, d.h. es wird angezeigt, ob das betreffende Wechselrichtergerät 2 fehlerhaft ist und demzufolge vorzugsweise innerhalb der Schaltkette SK auszutauschen ist. Bei Betätigung des Notschalters 3 werden vorzugsweise gewissermaßen durch einen Dominoeffekt alle in der Schaltkette SK miteinander verschalteten Geräte nachfolgend aktiviert bzw. deaktiviert. Die Schaltung der verschiedenen Wechselrichtergeräte 2 innerhalb der Schaltkette SK erfolgt dabei vorzugsweise mit einer sehr hohen Schaltgeschwindigkeit. Mithilfe der Überbrückungsschaltung 9 bzw. der Bypassschaltung innerhalb der Schaltungsanordnung 1 wird erreicht, dass sich der Schalt-Dominoeffekt selbst bei Ausfall eines innerhalb der Schaltkette befindlichen fehlerhaften Gerätes bis hin zum Ende der Schaltkette SK fortsetzt.

Die Schaltungsanordnung 1 dient zum sicheren Schalten von Wechselrichtergeräten 2 für eine Anlage mit einem gemeinsamen Notschalter 3 und erlaubt somit einen wired shutdown (WSD) der betreffenden Anlage. Die erfindungsgemäße Schaltungsanordnung 1 kann bei einer möglichen Ausführungsform zum sicheren Ausschalten von Wechselrichtergeräten 2 einer Anlage mit einem einzigen gemeinsamen Notausschalter 3 verwendet werden. In einem alternativen Anwendungsfall kann die Schaltungsanordnung 1 auch zum Einschalten von verschiedenen Wechselrichtergeräten 2 einer Anlage mit einem einzigen gemeinsamen Schalter 3 verwendet werden.

In einer möglichen Ausführungsform wird die Anschlussklemme 7 durch einen vierpoligen X25-Anschluss gebildet. Beispielsweise bilden Pin 1 und Pin 2 der Anschlussklemme X25 den Schaltsignaleingang 4 und Pin 3 und Pin 4 der Anschlussklemme X25 den Schaltsignalausgang 5. Wenn der Schaltsignaleingang 4 an der Anschlussklemme 7 aktiviert wird, wird der Schaltsignalausgang 5 ebenfalls aktiviert. Durch die Verkabelung mithilfe der Schaltsignalleitungen 6 aktiviert der Schaltsignalausgang 5 den Schaltsignaleingang 4 des nachfolgenden Wechselrichtergeräts 2. Durch diesen Dominoeffekt können alle in der Schaltkette SK verschalteten Wechselrichtergeräte 2 nachfolgend aktiviert werden. Die Aktivierung kann bei einer ersten Variante darin bestehen, dass das betreffende Wechselrichtergerät 2 automatisch abgeschaltet wird. Alternativ kann die Aktivierung darin bestehen, dass das betreffende Wechselrichtergerät 2 automatisch eingeschaltet wird. Freigabeleitungen 17 innerhalb des Wechselrichtergerätes 2 bewirken, dass die interne Elektronik aktiviert wird und das zugehörige AC-Relais 12 geschaltet wird. Weiterhin erfolgt über die Freigabeleitungen 17 eine Aktivierung des Schaltsignalausgangs 5 der X25-Anschlussklemme 7.

Je nach Anwendungsfall sind weitere Ausführungsvarianten der erfindungsgemäßen Schaltungsanordnung 1 möglich. Beispielsweise können in einer möglichen Ausführungsform die Konfigurationsschalter 10 durch Steuerleitungen ersetzt werden, die mit einer zentralen Steuerungsschaltung der Anlage verbunden sind. Weiterhin kann ein Betriebszustand der Schaltungsanordnung 1 und/oder des Wechselrichtergerätes 2 dieser zentralen Steuerung der Anlage mitgeteilt werden. Beispielsweise kann mitgeteilt werden, ob ein Wechselrichtergerät 2 defekt ist oder nicht. Aufgrund der Überbrückungsschaltung 9 funktioniert die Schaltkette SK selbst bei Auftreten eines Defekts innerhalb des Wechselrichtergerätes 2 bzw. Auftreten eines Defekts innerhalb der Schaltungsanordnung 1. Ein defektes Wechselrichtergerät 2-i kann demzufolge ohne akuten Zeitdruck aus der Schaltkette SK entfernt werden, indem man den Schaltsignalausgang 5 des vorgeschalteten Wechselrichtergerätes 2-(i-1) mit dem Schaltsignaleingang des nachgeschalteten Wechselrichtergeräts 2-(i+1) mithilfe von Schaltsignalleitungen 6 direkt verbindet und das defekte Wechselrichtergerät 2-i entfernt. Alternativ wird das defekte Wechselrichtergerät durch ein fehlerfreies Wechselrichtergerät 2-i ersetzt. Die Schaltkette SK verbindet die verschiedenen Teilnehmer bzw. Wechselrichtergeräte 2 sicher miteinander und bietet zudem die Möglichkeit ausgefallene bzw. defekte Geräte 2 zu überbrücken. Mithilfe eines einzigen Notschalters 3 kann eine beliebige Anzahl N an Geräten bzw. Wechselrichtergeräten 2 je nach Anwendungsfall zuverlässig und schnell an- oder abgeschaltet werden. Längere Wegstrecken zwischen verschiedenen Wechselrichtergeräten 2 können beispielsweise mittels eines 12 V-Schaltpotentials und mittels entsprechenden Isolationsmaßnahmen erreicht werden.

### BEZUGSZEICHENLISTE

- 1: Schaltungsanordnung
- 2: Wechselrichtergerät
- 3: Notschalter
- 4: Schaltsignaleingang
- 5: Schaltsignalausgang
- 6: Schaltsignalleitungen
- 7: Anschlussklemme
- 8: Potentialtrennungsschaltung
- 9: Überbrückungsschaltung
- 10: Konfigurationsschalter
- 11: Solarpaneele
- 12: AC-Relais
- 13: Stromwandlerschaltung
- 14: Stromnetz
- 15: AC-Ausgang
- 16: DC-Eingang
- 17: interne Freigabeleitung
- 18: RSB

## Patentansprüche

1. Wechselrichtergerät (2) für eine Anlage, insbesondere für eine Photovoltaikanlage,
wobei das Wechselrichtergerät (2) aufweist:
- einen zweipoligen Schaltsignaleingang (4) zum Anschließen eines Notschalters (3) der Anlage oder zum Anschließen eines Schaltsignalausgangs eines anderen Wechselrichtergerätes der Anlage,
- einen zweipoligen Schaltsignalausgang (5) zum Anschließen eines Schaltsignaleingangs eines anderen Wechselrichtergerätes der Anlage,
- einer Potentialtrennschaltung (8), die dazu ausgelegt ist, den Schaltsignaleingang (4) und den Schaltsignalausgang (5) potentialgetrennt miteinander zu koppeln,
- wobei das Wechselrichtergerät (2) bei Anschluss eines Notschalters (3) an seinem Schaltsignaleingang (4) mittels eines daran vorgesehenen Konfigurationsschalters (10) als Master (M) einer Schaltkette der Anlage konfigurierbar ist, die das als Master (M) konfigurierte Wechselrichtergerät (2) selbst und alle an dessen Schaltsignalausgang (5) über Schaltsignalleitungen (6) kettenförmig nachgeschalteten und mittels Konfigurationsschaltern (10) als Slave (S) konfigurierte Wechselrichtergeräte (2) umfasst,
wobei die gesamte Schaltkette bei Betätigung des an dem Schaltsignaleingang (4) des als Master (M) konfigurierten Wechselrichtergerätes (2) angeschlossenen Notschalters (3) über die Schaltsignalleitungen (6) kaskadenförmig automatisch geschaltet wird.

2. Wechselrichtergerät (2) nach Anspruch 1, mit einer vierpoligen Anschlussklemme (7), die den zweipoligen Schaltsignaleingang (4) und den zweipoligen Schaltsignalausgang (5) umfasst.

3. Wechselrichtergerät (2) nach Anspruch 1 oder 2,
wobei der zweipolige Schaltsignaleingang (4) und der zweipolige Schaltsignalausgang (5) der Anschlussklemme (7) des Wechselrichtergerätes (2) durch eine als Optokopplerschaltung ausgebildete Potentialtrennschaltung (8) voneinander potentialgetrennt sind.

4. Wechselrichtergerät (2) nach einem der vorangehenden Ansprüche 1 bis 3,
mit einer Überbrückungsschaltung (9), die dazu ausgelegt ist, ein defektes oder ausgefallenes Wechselrichtergerät (2) innerhalb der Schaltkette automatisch zu überbrücken.

5. Wechselrichtergerät (2) nach Anspruch 4,
wobei die Überbrückungsschaltung (9) des Wechselrichtergerätes (2) zwischen dem Schaltsignaleingang (4) und dem Schaltsignalausgang (5) der Anschlussklemme (7) des Wechselrichtergerätes (2) vorgesehen ist.

6. Wechselrichtergerät (2) nach Anspruch 5,
wobei die Überbrückungsschaltung (9) des Wechselrichtergerätes (2) je Schaltsignalleitung (6) zumindest eine in Flussrichtung geschaltete Diode aufweist.

7. Wechselrichtergerät (2) nach einem der vorangehenden Ansprüche 1 bis 6,
wobei der Notschalter (3) ein passiver Schalter ist, der an einem Schaltsignaleingang (4) des als Master (M) konfigurierten Wechselrichtergerätes (2) der Anlage angeschlossen ist.

8. Wechselrichtergerät (2) nach einem der vorangehenden Ansprüche 1 bis 7,
mit einem Gleichstromeingang (16) zum Anschluss von Solarpaneelen (11), die bei Sonnenlichteinstrahlung einen Gleichstrom erzeugen, welcher durch eine in dem Wechselrichtergerät (2) vorgesehene Stromwandlerschaltung (13) in einen Wechselstrom umgewandelt wird,
wobei bei Aktivierung des Wechselrichtergerätes (2) der Schaltkette ein in dem Wechselrichtergerät vorgesehenes AC-Relais (12) geschlossen wird, um den durch die im Wechselrichtergerät (2) vorgesehene Stromwandlerschaltung (13) erzeugten Wechselstrom an ein Stromnetz (14) abzugeben.

9. Wechselrichtergerät (2) nach einem der vorangehenden Ansprüche 1 bis 8,
wobei bei einem Verkabelungsfehler das Wechselrichtergerät (2) automatisch in einen sicheren Betriebszustand geschaltet wird.

10. Wechselrichtergerät (2) nach einem der vorangehenden Ansprüche 1 bis 9,
wobei die Konfigurationsschalter (10) der Schaltkette mit einer Logikschaltung verbunden sind, welche überprüft, ob die Wechselrichtergeräte (2) innerhalb der Schaltkette geeignet konfiguriert sind.

11. Photovoltaikanlage mit Photovoltaikstrings, die jeweils an ein zugehöriges Wechselrichtergerät (2) nach einem der vorstehenden Ansprüche angeschlossen sind, wobei die Wechselrichtergeräte (2) der Photovoltaikanlage durch Betätigung eines gemeinsamen Notschalters (3) sicher abschaltbar sind.

## Claims

1. Inverter device (2) for a system, in particular for a photovoltaic system,
the inverter device (2) having:
- a dipolar switching signal input (4) for connecting an emergency switch (3) of the system or for connecting a switching signal output of another inverter device of the system,
- a dipolar switching signal output (5) for connecting a switching signal input of another inverter device of the system,
- a potential separator circuit (8), configured to couple the switching signal input (4) and the switching signal output (5) to one another in a potentially separated manner,
- the inverter device (2), when an emergency switch (3) is connected to the switching signal input (4) thereof, being configurable by way of a configuration switch (10) provided thereon as a master (M) of a switching chain of the system, said chain comprsising the inverter device (2) configured as a master (M) itself as well as all inverter devices (2) connected to the switching signal output (5) thereof downstream via switching signal lines (6) and configured as slaves (S) by way of configuration switches (10),
the entire switching chain being switched automatically in a cascade via the switching signal lines (6) when the emergency switch (3) connected to the switching signal input (4) of the inverter device (2) configured as a master (M) is actuated.

2. Inverter device (2) according to claim 1, comprising a quadripolar terminal (7) which comprises the dipolar switching signal input (4) and the dipolar switching signal output (5).

3. Inverter device (2) according to either claim 1 or claim 2, wherein the dipolar switching signal input (4) and the dipolar switching signal output (5) of the terminal (7) of the inverter device (2) are potentially separated from one another by a potential separator circuit (8) formed as an optical coupler circuit.

4. Inverter device (2) according to any of preceding claims 1 to 3,
comprising a bridging circuit (9) configured to bridge a defective or failed inverter device (2) within the switching chain automatically.

5. Inverter device (2) according to claim 4,
wherein the bridging circuit (9) of the inverter device (2) is provided between the switching signal input (4) and the switching signal output (5) of the terminal (7) of the inverter device (2).

6. Inverter device (2) according to claim 5,
wherein, for each switching signal line (6), the bridging circuit (9) of the inverter device (2) has at least one diode connected in the flow direction.

7. Inverter device (2) according to any of preceding claims 1 to 6,
wherein the emergency switch (3) is a passive switch which is connected to a switching signal input (4) of the inverter (2), configured as a master (M), of the system.

8. Inverter device (2) according to any of preceding claims 1 to 7,
comprising a DC input (16) for connecting sonar panels (11), which when irradiated with sunlight generate a direct current which is converted into an alternating current by a current converter circuit (13) provided in the inverter device (2), wherein when the inverter device (2) of the switching chain is activated an AC relay (12) provided in the inverter device is closed so as to deliver the alternating current generated by the current converter circuit (13) provided in the inverter device (2) to a power grid (14).

9. Inverter device (2) according to any of preceding claims 1 to 8,
wherein in the event of a wiring error the inverter device (2) is automatically switched into a safe operating state.

10. Inverter device (2) according to any of preceding claims 1 to 9,
wherein the configuration switches (10) of the switching chain are connected to a logic circuit, which checks whether the inverter devices (2) within the switching chain are configured appropriately.

11. Photovoltaic system comprising photovoltaic strings which are each connected to an associated inverter device (2) according to any of the preceding claims, wherein the inverter devices (2) of the photovoltaic system can be switched off safely by actuating a shared emergency switch (3).

## Revendications

1. Appareil onduleur (2) pour une installation, en particulier pour une installation photovoltaïque,
l'appareil onduleur (2) présentant :
- une entrée de signal de commutation bipolaire (4) pour la connexion d'un commutateur d'urgence (3) de l'installation ou pour la connexion d'une sortie de signal de commutation d'un autre appareil onduleur de l'installation,
- une sortie de signal de commutation bipolaire (5) pour la connexion d'une entrée de signal de commutation d'un autre appareil onduleur de l'installation,
- un circuit d'isolation galvanique (8) qui est conçu pour coupler l'entrée de signal de commutation (4) et la sortie de signal de commutation (5) l'une à l'autre de manière isolée galvaniquement,
- dans lequel, lorsqu'un commutateur d'urgence (3) est connecté à son entrée de signal de commutation (4), l'appareil onduleur (2) peut être configuré, au moyen d'un commutateur de configuration (10) prévu sur celui-ci, comme maître (M) d'une chaîne de commutation de l'installation qui comprend l'appareil onduleur (2) configuré en tant que maître (M) lui-même et tous les appareils onduleurs (2) qui sont branchés en aval de sa sortie de signal de commutation (5) au sein d'une chaîne par l'intermédiaire de lignes de signal de commutation (6) et qui sont configurés comme esclaves (S) au moyen de commutateurs de configuration (10),
dans lequel l'ensemble de la chaîne de commutation est automatiquement commuté en cascade par l'intermédiaire des lignes de signal de commutation (6) lorsque le commutateur d'urgence (3) connecté à l'entrée de signal de commutation (4) de l'appareil onduleur (2) configuré comme maître (M) est actionné.

2. Appareil onduleur (2) selon la revendication 1, comportant une borne de connexion quadripolaire (7) qui comprend l'entrée de signal de commutation bipolaire (4) et la sortie de signal de commutation bipolaire (5).

3. Appareil onduleur (2) selon la revendication 1 ou 2,
dans lequel l'entrée de signal de commutation bipolaire (4) et la sortie de signal de commutation bipolaire (5) de la borne de connexion (7) de l'appareil onduleur (2) sont isolées galvaniquement l'une de l'autre par un circuit d'isolation galvanique (8) réalisé sous la forme d'un circuit optocoupleur.

4. Appareil onduleur (2) selon l'une des revendications 1 à 3 précédentes,
comportant un circuit de pontage (9) qui est conçu pour ponter automatiquement un appareil onduleur (2) défectueux ou défaillant au sein de la chaîne de commutation.

5. Appareil onduleur (2) selon la revendication 4,
dans lequel le circuit de pontage (9) de l'appareil onduleur (2) est prévu entre l'entrée de signal de commutation (4) et la sortie de signal de commutation (5) de la borne de connexion (7) de l'appareil onduleur (2).

6. Appareil onduleur (2) selon la revendication 5,
dans lequel le circuit de pontage (9) de l'appareil onduleur (2) présente au moins une diode branchée dans le sens du flux par ligne de signal de commutation (6).

7. Appareil onduleur (2) selon l'une des revendications 1 à 6 précédentes,
dans lequel le commutateur d'urgence (3) est un commutateur passif qui est connecté à une entrée de signal de commutation (4) de l'appareil onduleur (2) de l'installation qui est configuré comme maître (M).

8. Appareil onduleur (2) selon l'une des revendications 1 à 7 précédentes,
comportant une entrée de courant continu (16) pour la connexion de panneaux solaires (11) qui, lorsqu'ils sont exposés à la lumière du soleil, génèrent un courant continu qui est converti en un courant alternatif par un circuit convertisseur de courant (13) prévu dans l'appareil onduleur (2),
dans lequel, lorsque l'appareil onduleur (2) de la chaîne de commutation est activé, un relais AC (12) prévu dans l'appareil onduleur est fermé pour fournir le courant alternatif généré par le circuit convertisseur de courant (13) prévu dans l'appareil onduleur (2) à un réseau électrique (14) .

9. Appareil onduleur (2) selon l'une des revendications 1 à 8 précédentes,
dans lequel, en cas de défaut de câblage, l'appareil onduleur (2) est automatiquement mis dans un état de fonctionnement sûr.

10. Appareil onduleur (2) selon l'une des revendications 1 à 9 précédentes,
dans lequel les commutateurs de configuration (10) de la chaîne de commutation sont reliés à un circuit logique qui vérifie si les appareils onduleurs (2) sont configurés de manière appropriée au sein de la chaîne de commutation.

11. Installation photovoltaïque comprenant des branches photovoltaïques connectées chacune à un appareil onduleur (2) associé selon l'une des revendications précédentes, dans laquelle les appareils onduleurs (2) de l'installation photovoltaïque peuvent être déconnectés de manière sûre en actionnant un commutateur d'urgence commun (3).
